# EUROPÄISCHE PATENTSCHRIFT

(11) **EP 2 708 493 B1**
(45) Veröffentlichungstag und Bekanntmachung des Hinweises auf die Patenterteilung: **07.03.2018**
(21) Anmeldenummer: 13004309.4
(22) Anmeldetag: 03.09.2013
(51) Int. Cl.: C01B 3/12, C01B 3/14, C01B 3/50, B01D 53/22, B01D 53/26

(54) **Verfahren zum Betreiben eines Wasserdampf benötigenden Teilprozess in einem Gesamtprozess**
Method for operating a subprocess in an overall process that requires steam
Méthode de fonctionnement d'un procedé partiel nécessitant de la vapeur d'eau dans un procedé global

(30) Priorität: 14.09.2012 DE 102012018164
(43) Veröffentlichungstag der Anmeldung: 19.03.2014
(73) Patentinhaber: Forschungszentrum Jülich GmbH, 52425 Jülich (DE)
(72) Erfinder: Schiebahn, Sebastian, 52382 Niederzier (DE); Riensche, Ernst, 52428 Jülich (DE); Zhao, Li, 52428 Jülich (DE); Weber, Michael, 52076 Aachen (DE); Stolten, Detlef, 52076 Aachen (DE)

(56) Entgegenhaltungen:
- WO-A1-03/008329
- US-A1- 2004 179 998
- US-A1- 2005 153 176
- S. SCHIEBAHN ET AL: "Integration of H2-Selective Membrane Reactors in the Integrated Gasification Combined Cycle for CO2 Separation", CHEMICAL ENGINEERING & TECHNOLOGY, Bd. 35, Nr. 3, 6. Februar 2012 (2012-02-06), Seiten 555-560, XP055092305, ISSN: 0930-7516, DOI: 10.1002/ceat.201100497
- BRACHT M ET AL: "Water gas shift membrane reactor for CO2 control in IGCC systems: techno-economic feasibility study", ENERGY CONVERSION AND MANAGEMENT, ELSEVIER SCIENCE PUBLISHERS, OXFORD, GB, Bd. 38, Nr. 1001, 1. Januar 1997 (1997-01-01), Seiten S159-S164, XP004061592, ISSN: 0196-8904, DOI: 10.1016/S0196-8904(96)00263-4

## Beschreibung

Die Erfindung betrifft ein Verfahren zum Betreiben eines Teilprozesses innerhalb eines Gesamtprozesses, wobei der Teilprozess Wasserdampf benötigt, der nicht bzw. nicht vollständig verbraucht wird. Ein solcher Teilprozess kann beispielsweise eine ein- oder mehrstufige Shiftstufe innerhalb eines Kraftwerkes als Gesamtprozess sein.

### Stand der Technik

In vielen Verfahrenskonzepten spielt der Wasserhaushalt eine entscheidende Rolle, z. B. da Wasserdampf in chemischen Reaktionen benötigt wird bzw. dort entsteht oder auch Wasser in der Atmosphäre erwünscht bzw. unerwünscht ist. Die Erzeugung von Wasserdampf ist aufgrund der hohen Verdampfungsenthalpie ein sehr energieintensiver Prozess, dessen Aufwand den Wirkungsgrad des Prozesses erheblich reduziert. Häufig geht Wasserdampf als Abgas oder durch Kondensation verloren, so dass die investierte Enthalpie verloren geht, ohne daraus Nutzen gezogen zu haben.

Bislang wurde der Wasserhaushalt innerhalb eines Prozesses in der Regel durch das Aufsättigen mit Wasserdampf in einem Sättiger (Steigerung des Wasserdampfgehaltes) oder durch Kühlung und Kondensation (Senkung des Wasserdampfgehaltes) reguliert. In diesen Fällen wird hochwertige Energie In den Prozess zur Wasserdampferzeugung investiert, während gleichzeitig an anderen Stellen im Prozess Wasserdampf im Abgas verloren geht oder auf einem niedrigeren Temperaturniveau als bei der Wasserdampferzeugung auskondensiert wird. Das heißt, dass selbst bei einer integrierten Abwärmenutzung ein hoher Anteil der exergetischen Wertigkeit verloren geht. Zusätzlich muss zur Kondensation von Wasser der gesamte Prozessstrom gekühlt werden, was mit zusätzlichem Aufwand und Wirkungsgradverlust einhergeht.

Zu den Wasserdampf benötigen Teilprozessen in einem Gesamtprozess zählen beispielsweise die Methanol-Reformierung und die Wasserdampfreformierung von Methan oder Kohlendioxid.

Ein Methanol-Reformer ist eine Vorrichtung der Chemietechnik, die in der Brennstoffzellentechnik verwendet wird, um aus einem Methanol-Wasser-Gemisch unter Freisetzung von Kohlendioxid reinen Wasserstoff zu erzeugen. Als chemische Reaktion liegt eine Wasserdampfreformierung zugrunde.

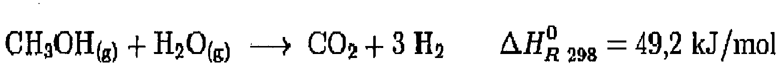

Die Wasserdampfreformierung von Methan selbst ist ein allothermer Prozess, der nach der folgenden Gleichung abläuft;

CH₄ + H₂O ⇄ CO + 3 H₂, ΔH = +206,2kJ/mol

Zur Steigerung der Wasserstoffausbeute kann das entstehende Kohlenmonoxid in einer weiteren Reaktion, der Wassergas-Shift-Reaktion, auch allg. Shift-Stufe genannt, zu Kohlendioxid und weiterem Wasserstoff umgesetzt werden.

CO + H₂O ⇄ CO₂ + H₂, ΔH = -41,2kJ/mol

Zur Durchführung wird heißer Wasserdampf mit dem zu reformierenden Gas (zum Beispiel Erdgas) oder mit verdampfter Flüssigkeit (zum Beispiel Leichtbenzin) vermischt und unter ständiger Energiezufuhr an einem heterogenen Katalysator in der Gasphase umgesetzt.

Bei der Wasserdampfreformierung von Methan (CH₄) bzw. bei der Wassergas-Shift-Reaktion (WGS-Reaktion) von Synthesegas (CO, H₂) wird je nach Anwendung ein großer Überschuss an Wasserdampf (H₂O/C > 2 bzw. 1) benötigt, um den Reaktionsumsatz der Gleichgewichtsreaktionen entsprechend weit auf die Seite der Produkte zu schieben. Prinzipiell gelten folgende Ausführungen aber für jede Reaktion, bei der ein auf die reaktionsbedingte Stöchiometrie bezogener Überschuss an Wasserdampf in der gasförmigen Phase benötigt wird, wie beispielsweise die Melhanreformierung, die Synthesegasshift oder auch die Methanol-Reformierung für die H₂-Produktion.

Bei der Wassergas-Shift-Reaktion wird das Verhältnis H₂O/CO oft größer als 2 mol/mol gewählt, insbesondere wenn der CO-Anteil für Foigeanwendungen, wie z. B, Brenngaserzeugung für Brennstoffzellen, Wasserstofferzeugung oder CO-Abtrennung, möglichst weit, insbesondere auf einen CO-Anteil auf weniger als 1 Mol-% gesenkt werden muss. Dies bedeutet, dass sich hier regelmäßig selbst bei einem vollständigen Reaktionsumsatz die Hälfte des Wasserdampfes im Produktstrom wiederfindet.

Normalerweise wird der Wasserdampfanteil nach benötigtem Reaktionsumsatz, Temperaturentwicklung und Energiebedarf berechnet, wobei ein Kompromiss zwischen Energiebedarf und Reaktionsumsatz gewählt wird. Einerseits bedeutet mehr Wasserdampf in der Regel auch mehr Umsatz, mehr Wasserdampf bedeutet aber auch einen wesentlich höheren Energiebedarf. Andererseits ist die Wegs-Reaktion exotherm und führt zu einer starken Temperaturerhöhung. Überschüssiger Wasserdampf kann daher auch als Wärmepuffer eingesetzt werden, um Material- und Katatysatorbeiastung zu reduzieren. In jeden Fall sollte ein Mindest-Wasserdampfgehalt zur Vermeidung von Rußbildung bereitgestellt werden.

Der Wasserdampf kann dabei sowohl direkt zugeführt werden oder in Form eines Sättigers. Um den verbleibenden Wasserdampf im Produktstrom nicht vollständig zu verlieren, kann ein System aus Sättiger und Kondensator verwendet werden, bei dem der Wasserdampf bei niedrigerer Temperatur wieder auskondensiert wird. Nachteilig dabei ist der Aufwand an Kolonnen und Wärmetauschern, Außerdem kann die Wärme, die bei der Kondensation frei gesetzt wird, nur teilweise für die Verdampfung genutzt werden, da sie auf einem niedrigeren Temperaturniveau freigesetzt wird.

Eine wesentliche Anforderung an eine Wasserdampf leitende Membran ist eine hohe Selektivität für Wasserdampf gegenüber den anderen beteiligten Komponenten. Der im Einzelfall erforderliche Wert ist abhängig von der Anwendung, wobei die tolerierbaren zusätzlichen Permeatströme maßgebend sind.

Zudem ist generell eine hohe Permeabilität für Wasserdampf erstrebenswert, da dadurch das Membranmodul kleiner gebaut werden kann, was zu Kostenersparnis und weniger Druckverlust führt. Die Gaspermeabilität P wird in der Regel über die Einheit Barrer definiert, wobei ein Barrer definiert ist als die Durchflussrate (in m³ s⁻¹) durch das Material, multipliziert mit seiner Dicke (m), geteilt durch die durchströmte Fläche (m²) und durch die Druckdifferenz. Beeinflusst wird die Permeabilität sowohl von der Art des Permeates als auch durch Druck, Temperatur, Dicke des Feststoffes und der Flächengröße. In der Lecksuchtechnik gibt man die Durchflussrate (Permeationsrate) in hPa*l/s bzw. Pa*m³/s an.

Bei der Auslegung des tatsächlichen Membranmoduls müssen mehrere Aspekte beachtet werden. Zum einen muss aus wirtschaftlicher Sicht beurteilt werden, bis zu welcher Größe der Membranfläche der energetische Gewinn durch zusätzlich gewonnenen Dampf die finanziellen Mehrkosten durch die erhöhte Membranfläche überwiegt. Als zweites spielt die Selektivität für die verfahrenstechnische Auslegung eine entscheidende Bedeutung. So kann der maximale Dampfübertragungsgrad auch dadurch begrenzt sein, dass unerwünschte Co-Permeation, wie z. B. von Verunreinigungen wie H₂S, unterhalb eines gewissen Grenzwertes sein soll.

Die Membran sollte chemisch stabil gegenüber allen beteiligten Komponenten sein, um sie einsetzen zu können und Alterungseffekte zu minimieren. Wichtig für die in Frage kommenden Anwendungen, ist der Temperaturbereich, in dem die Membran betrieben werden kann, Generell ist ein weiter Bereich (insbesondere zu höheren Temperaturen) günstig, da so das Anwendungspotential des Wasserdampftransportes verbreitert werden kann. In jedem Fall muss die Temperatur an jeder Stelle der Membran oberhalb der jeweiligen Kondensationstemperatur liegen, um die Vorteile des Wasserdampftransportes zu erhalten.

Die Wirtschaftlichkeit einer Membran ist dabei von zwei Faktoren abhängig, Einerseits gibt die Selektivität der Membran ihre Fähigkeit an, zwischen zwei unterschiedlichen Materialien, z. B, zwei Molekülsorten in einem Gasstrom unterscheiden zu können. Andererseits bestimmt die Lelstungsfähigkeit der Membran unter bestimmten Randbedingungen den zu erzielenden Permeatfluss.

Bislang können zum Zwecke der Wasserdampfverschiebung am besten Polymermembranen eingesetzt werden. Sie besitzen eine hohe Selektivität und Permeabilität für Wasserdampf und haben ihre Einsetzbarkeit bewiesen. Als maximale obere Grenze der Einsatztemperatur von Polymermembranen wird heute 250 °C genannt. Generell sind alle heute bekannten Polymermembranen wasserdampfpermeabel.

Bei der Auswahl von geeigneten Membranmaterialien ist sowohl die Wasserdampf-Permeabllltät als auch die Selektivität gegenüber den anderen Gasen (hauptsächlich H₂, N₂, CO₂, CO, aber auch H₂S) von Bedeutung. Die Permeabilität (dividiert durch die Membrandicke) hat einen großen Einfluss auf die benötigte Membranfläche. Die Selektivität ist entscheidend dafür, wie viel von den anderen Komponenten mit hindurch permeiert. Dabei erzielen heutige Polymermembranen bereits sehr gute Werte hinsichtlich der Wasserdampfpermeabilität bei gleichzeitig hoher Selektivität von Wasserdampf gegenüber anderen Komponenten. So werden Permeabilitäten von über 10⁵ Barrer bei gleichzeitiger Selektivität gegenüber N₂ von ebenfalls 10⁵ erreicht.

Bekannte poröse Membranen können für höhere Temperaturbereiche bis hin zu ca. 550 °C eingesetzt werden. Aufgrund des starken Dipolcharakters ist das Wasserdampfmolekül extrem klein (kinetischer Durchmesser 0,265 nm), sogar kleiner als das H₂-Molekül (0,289 nm), so dass eine Trennung über die Molekülgröße/Porengröße erfolgen kann. Die Entwicklung solcher Membranen ist bislang kein Forschungsschwerpunkt. Bisher ist die Entwicklung poröser Membranen auf die selektive Abtrennung von CO₂ oder H₂ fokussiert.

Neuere Entwicklungen zeigen den Einsatz einer Graphen-basierten Membran, die ideal-selektiv und mit hoher Permeanz wasserdampfdurchlässig ist. Unter der Permeanz wird dabei der Kehrwert des Membranwiderstandes verstanden. Dementsprechend ergibt das Produkt aus Permeanz und Dicke der aktiven Schicht der Membran die Permeabilität der Membran an, welches eine Materiafeigenschaft der Membran darstellt.

### Aufgabe und Lösung der Erfindung

Der Erfindung liegt die Aufgabe zu Grunde ein verbessertes Verfahren zum Betreiben eines Wasserdampf benötigenden Teilprozesses im Rahmen eines Gesamtprozesses, bereit zu stellen, wobei der Teilprozess die Umsetzung von CO mittels einer Wassergas-Shift-Reaktion verfolgt, und wobei das verfahren gegenüber dem Stand der Technik einen besseren Wirkungsgrad, gegebenenfalls einen verminderten apparativen Aufwand sowie neue Optimierungsmöglichkeiten hinsichtlich der Prozessführung, insbesondere in Bezug auf einen verbesserten CO-Umsatz und der Temperaturführung aufweist.

Die Aufgabe der Erfindung wird gelöst durch ein Verfahren mit den Merkmalen gemäß Hauptanspruch. Vorteilhafte Ausgestaltungen des Verfahrens finden sich in den davon abhängigen Unteransprüchen wieder.

### Gegenstand der Erfindung

In dieser Anmeldung wird die Verwendung einer wasserdampfselektiven Membran zur Verschiebung von Wasserdampfströmen innerhalb eines Gesamtprozesses und insbesondere innerhalb eines Teilprozesses vorgeschlagen, um einerseits die Aufsättigung und Kondensation von wasserhaltigen Gasströmen auf ein Minimum zu reduzieren somit den energetischen Wirkungsgrad erheblich zu steigern und andererseits durch eine energetische Optimierung neue Prozessauslegungen ermöglicht werden, welche neben einem erhöhten CO-Umsatz auch eine verbesserte Temperaturführung erlaubt. Gleichzeitig kann durch das erfindungsgemäße Verfahren auch der anlagentechnische Aufwand reduziert werden.

Bei dem vorgenannten Teilprozess handelt es ich dabei um einen Prozess zur Umsetzung von CO und H₂O zu CO₂ und H₂ mittels einer Wassergas-Shift-Reaktion, wie er üblicherweise in einer ein- oder mehrstufigen Shift-Stufe mit oder ohne Pre-Shift realisiert wird.

Dabei kann prinzipiell zwischen drei Einsatzgebieten für die Verwendung einer wasserdampfselektiven Membran unterschieden werden:
- als Wasserdampfbypass: Ein Teilprozess soll/muss mit niedrigerem Wasserdampfgehalt betrieben werden, so dass dieser Teil überbrückt werden muss (downstream);
- als Wasserdampfrezirkulation: Ein Teilprozess soll/muss mit einem Wasserdampfgehalt betrieben werden, der nicht bzw. nicht vollständig verbraucht wird, so dass der überschüssige Wasserdampf möglichst vollständig intern rezirkuliert werden sollte (upstream, somit Wasserdampfrekuperierung);
- als Wasserdampfrückgewinnung: Ein Strom, der einen Teilprozess verlässt, enthält einen frei verfügbaren Wasserdampfanteil, der in einem anderen Strom nutzbringend verwendet werden kann. Dies kann auch prozess- oder anlagenübergreifend sein.
In dieser Anmeldung wird die Verwendung einer wasserdampfselektiven Membran zur Wasserdampfrezirkulation und gleichzeitigen Wasserdampfrekuperierung vorgeschlagen. Eine wasserdampfselektive Membran ist eine solche, die hochselektiv Wasserdampf permeieren lässt und die restlichen Komponenten aus einem Fluidstrom zurückhält. Dafür geeignet sind insbesondere Polymermembranen und poröse Membranen, bei denen die Triebkraft für die Permeation die Differenz der Partialdrücke des Wasserdampfes auf beiden Seiten der Membran ist.

Die Erfindung beschreibt einen allgemeinen Prozess (Gesamtprozess), in dem es einen Teilprozess gibt, der Wasserdampf benötigt, welcher nicht bzw. nur teilweise verbraucht wird, da entweder Wasserdampf im Überschuss für eine chemische Reaktion benötigt wird, und/oder Wasserdampf als Inertgas benötigt wird, beispielsweise um einen Massenstrom zu erhöhen, um die Wärmekapazität zu steigern oder um eine chemische Reaktionen zu verlangsamen oder zu behindern. Anwendungsbeispiele für den ersten Fall sind z. B. verschiedene Wassergas-Shiftreaktionen (CO-Shift, einzeln oder simultan mit der Methanreformierung) und die Methanolreformierung. Typische Anwendungsfälle für den zweiten Fall sind beispielsweise die Verringerung bzw. Verhinderung der NOx-Bildung oder der Rußbildung.

Im vorliegenden Fall betrifft die Erfindung einen Gesamtprozess, wie beispielsweise eine Methanolreformierung oder eine Wasserdampfreformierung von Methan oder Kohlendioxid, bei der ein Synthesegas als Eduktgas entsteht, welches nachfolgend zur Steigerung der H₂-Ausbeute eine Wassergas-Shiftreaktionen als Teilprozess durchläuft.

Erfindungsgemäß ist vorgesehen, dass bezogen auf den Teilprozess eine wasserdampfselektive Membran zwischen dem wasserdampfhaltigen Produktstrom und einem wasserdampfärmeren Eduktstrom angeordnet ist, so dass ein großer Teil des Überschuss-Wasserdampfes des Teilprozesses für diesen rezirkuliert werden kann, ohne dass ein Kondensator und zusätzliche Wärmeaustauscher benötigt werden. Das verringert einerseits vorteilhaft die benötigte Menge an extern zugeführtem Wasserdampf für den Teilprozess und/oder ermöglicht es, den Teilprozess mit einem größeren Wasserdampfüberschuss zu betreiben.

Besonders vorteilhaft bei diesem Verfahren ist, dass zusätzlich der umliegende Gesamt-Prozess, in den der Teilprozess eingebettet ist, unverändert betrieben werden kann, so dass eine unabhängige Optimierung möglich ist. Die Anwendbarkeit der vorliegenden Erfindung ist dabei unabhängig vom restlichen Prozess, insbesondere von der Quelle des Synthesegases. Dieses kann aus unterschiedlichen Quellen stammen, wie z. B. der Vergasung von festen Brennstoffen wie Kohle oder Biomasse oder der Reformierung von Methan oder langkettigen Kohlenwasserstoffen. Die Quelle kann somit auch örtlich weit von der weiteren Prozessierung (Teilprozess) entfernt sein.

Eine wasserdampfselektive Membran ist eine solche, die hochselektiv Wasserdampf permeieren lässt und die restlichen Komponenten zurückhält. Unter "hochselektiv" wird im Rahmen dieser Erfindung verstanden, dass die Selektivität für Wasserstoff wenigstens 50 mal größer ist gegenüber jeweils allen übrigen Komponenten, beispielsweise CO₂ oder N₂, insbesondere sogar 200 mal größer und besonders vorteilhaft sogar mehr als 200 mal größer. Eine dafür geeignete Membran weist Permeabilitäten von wenigstens 10⁵ Barrer bei gleichzeitiger Selektivität gegenüber N₂ von wenigstens 10⁵ auf. Dafür geeignet sind insbesondere Polymermembranen und poröse Membranen, bei denen die Triebkraft für die Permeation die Differenz der Partialdrücke des Wasserdampfes auf beiden Seiten der Membran ist.

Dazu ist innerhalb eines Membranmoduls, welches die wasserdampfselektive Membran umfasst, ein Partialdruckgefälle für Wasserdampf zwischen Edukt- und Produktgasstrom notwendig. Je nach Gesamtdruck der beiden beteiligten Gasströme kann schon ein Partialdruckgefälle von 10 hPa ausreichen, um einen Wasserdampftransport über die Membran von der Produktgasseite auf die Eduktgasseite zu bewerkstelligen. Je größer das Partialdruckgefälle ist, desto größer ist die Triebkraft für den Wasserdampftransport durch die Membran. Vorteilhaft wäre daher ein Partialdruckgefälle von wenigstens 50 hPa, bzw. 100 hPa.

Vorteilhaft weist der Eduktstrom vor Eintritt in das Membranmodul einen Wasserdampfpartialdruck p₁ bis zu 2 MPa, insbesondere zwischen 50 und 500 kPa und besonders vorteilhaft zwischen 100 und 300 kPa auf, während der Produktstrom nach dem Teilprozess und vor Eintritt in das Membranmodul regelmäßig einen Wasserdampfpartialdruck p₂ zwischen 20 kPa und 5 MPa, insbesondere zwischen 500 kPa und 2 MPa aufweist.

Dabei ist davon auszugehen, dass der "trockene" Eduktstrom typischerweise einen Wasserdampfgehalt von weniger als 10 mol-% aufweist, während der Produktstrom regelmäßig einen Wasserdampfanteil von mehr als 15 mol-% aufweist. Dies führt unter Berücksichtigung der entsprechenden Volumenströme und der Gesamtdrücke bis zu 10 MPa für den Edukt- und den Produktstrom auch bei Berücksichtigung der vorliegenden Temperaturen zu den vorgenannten Bereichen der Wasserdampfpartialdrücke.

Die mechanische Stabilität der Wasserdampf selektiven Membran wird üblicherweise durch das Druckgefälle zwischen Edukt- und Produktstrom limitiert. Daher sollte das Gesamtdruckgefälle über die Membran nicht mehr als 1 MPa, vorzugsweise nicht mehr als 500 kPa und besonders vorteilhaft nicht mehr als 200 kPa betragen, wobei der Eduktgasstrom in der Regel vor Eintritt in das Membranmodul einen Gesamtdruck P₁ zwischen 100 kPa und 10 MPa, vorzugsweise zwischen 100 kPa und 3 MPa aufweist.

Die Temperaturen sowohl des Eduktgases als auch des Produktgases liegen typischerweise zwischen 80 °C und 550 °C, insbesondere zwischen 100 °C und 200 °C. Entsprechend der Temperaturen der beteiligten Gasströme ist eine Membran auszuwählen, die für dies Temperaturen geeignet ist.

Die in dieser Anmeldung beschriebenen Membranmodule sind in der Regel für einen maximalen Stoffaustausch ausgelegt. Eine vorteilhafte Ausgestaltung sieht ein Gegenstromprinzip vor. Andere Anordnungen, wie Kreuz- und Gleichstrom, sind jedoch ebenfalls möglich. Die Ausgestaltung über Kreuzstrom zeichnet sich beispielsweise durch konstruktiv einfache Zufuhr und Verteilung der ein- und austretenden Gasströme an einem Membranmodul aus.

Ein Wasserdampftausch über ein Membranmodul bietet aufgrund des engen Kontaktes der beiden Ströme neben dem reinen Wasserdampfaustausch auch die Möglichkeit des Wärmeaustausches. Dadurch können bei geeigneter Anwendung beide Aufgaben mit nur einem Bauteil durchgeführt werden. Im Allgemeinen gilt: Je weiter der Temperaturbereich der Membran ist, umso mehr kann die Membran auch zum Wärmeaustausch beitragen.

Prinzipiell gilt für eine Shiftreaktion: Der Dampfverbrauch steigt mit zunehmendem CO-Umsatz in allen Fällen überproportional an. Der erfindungsgemäße Einsatz der wasserdampfselektiven Membran vor der Shiftstufe als Teilprozess reduziert den Dampfbedarf bereits erheblich. Bei einem CO-Umsatz von 95 % beträgt die Ersparnis ca. 40 % des zuzuführenden Mitteldruck-Dampfes. Zusätzlich kann weitere Wärme auf einem niedrigeren Temperaturniveau zur Niederdruck-Produktion verwendet werden. Allerdings kann in der Regel nur ein Teil des Dampfes rezirkuliert werden, da das Synthesegas, insbesondere nach einer sauren Wasserwäsche, bereits einen erhöhten H₂O-Gehalt beim Eintritt hat.

Aber auch andere Verschaltungen, bei denen die Wasserdampfzufuhr zwischen die Shiftstufen integriert bzw. die Nutzung der Reaktionswärme intern vollzogen wird, sind möglich.

Die Wasserdampfmembran kann insbesondere zusätzlich auch als Wärmeaustauscher verwendet werden, um beispielsweise einen Teil der Reaktionswärme zwecks Wasserdampfproduktion zurückzuführen.

Da ein erhöhter Wasserdampfanteil jetzt nur noch sehr wenig Mehrenergiebedarf verursacht, kann die Optimierung des H₂O/C-Verhältnisses nach anderen Kriterien eingestellt werden. Bei stark exothermen oder endothermen Reaktionen können stark überstöchiometrische H₂O/C-Verhältnisse als Wärmepuffer genutzt werden, um Material- und Katalysatorbelastung durch starke Temperaturgradieneten zu reduzieren. Ein maximaler CO-Umsatz, welcher regelmäßig durch hohe H₂O/CO-Verhältnisse erreicht wird, ist somit auch ohne stark erhöhten Energieaufwand möglich.

Neben dem minimierten Energiebedarf für die Wasserdampfbereitstellung kann vorteilhaft auch auf eine Kühlung zur Wasserrückgewinnung verzichtet werden bzw diese deutlich reduziert werden. Dadurch bleibt die Wärme auf einem erhöhten Temperaturniveau, so dass der exergetische Wirkungsgrad steigt. Gleichzeitig wird die Wasserbilanz des Gesamtsystems optimiert, was bei wasserautarken Systemen von Bedeutung sein kann.

Falls der Eduktstrom schon einen leicht erhöhten Partialdruck an Wasserdampf aufweist, was den maximalen möglichen Abtrenngrad des rezirkulierbaren Wasserdampfes reduzieren würde, kann in einer vorteilhaften Ausgestaltung der Erfindung vor der Wassardampfmembran eine erste Shiftstufe (Pre-Shift) vorgesehen sein. Dadurch kann bereits ein Teil der Shift-Reaktion stattfinden und der Wasserdampfanteil in dem Eduktstrom durch den entsprechenden Verbrauch abgesenkt werden.

Der erfindungsgemäße Einsatz der wasserdampfselektiven Membran in Kombination mit einer vorgeschalteten Pre-Shift erhöht die Vorteile weiter, da ein größerer Anteil des Dampfes im Produktstrom rezirkuliert werden kann. So wird der benötigte Mitteldruck-Dampf bei einem CO-Umsatz von 95 % im Vergleich zur Shift ohne eine Dampfmembran sogar um ca. 80 % reduziert. Gleichzeitig wird mehr Niederdruck-Dampf produziert.

Eine weitere Ausgestaltung der Erfindung sieht einen Wassergas-Shift-Membranreaktor als Wasserdampf benötigenden Teilprozess vor, um den Reaktionsfortschritt zusätzlich durch das Abtrennen des Produktes H₂ zu verbessern. Mögliche Anwendungen betreffen auch die H₂-Produktion oder die Verstromung mit einer CO₂-Abtrennung, z. B. in einem IGCC-Kraftwerk. Unter IGCC (englisch: Integrated Gasification Combined Cycle; deutsch: Kombi-Prozess mit integrierter Vergasung) ist ein Gas-und-Dampf-Prozess mit vorgeschalteter Brennstoffvergasung zu verstehen.

Neben den bereits erwähnten Vorteilen ist hier besonders wichtig, dass das H₂O/CO-Verhältnis vorteilhaft derart hoch gewählt werden kann, dass Material belastende, übermäßige Temperatursteigungen abgepuffert und Temperaturspitzen vermieden werden können, ohne dass sich dies nachteilig auf den Gesamtwirkungsgrad auswirkt.

### Spezieller Beschreibungsteil

Nachfolgend wird die Erfindung anhand von einigen Figuren verdeutlicht, ohne dass dadurch jedoch eine Einschränkung des Schutzbereiches bewirkt werden soll. Es zeigen:
- Figur 1:: Prinzipielle Funktionsweise einer Wasserdampf leitenden Membran vor und nach einem Wasserdampf benötigenden Teilprozess;
- Figur 2:: Prinzipielle Funktionsweise einer Wasserdampf leitenden Membran zur Wasserdampfrezirkulation vor und nach einer Shiftstufe als Wasserdampf benötigenden Teilprozess;
- Figur 3:: Simulation zum Verlauf der Wasserdampfpartialdrücke entlang der Membran bei einer Shiftstufe als Wasserdampf benötigenden Teilprozess gemäß Figur 2;
- Figur 4:: Prinzipielle Funktionsweise einer Wasserdampf leitenden Membran zur Wasserdampfrezirkulation vor und nach einer Shiftstufe als Wasserdampf benötigenden Teilprozess bei einer mehrstufigen Shiftstufe;
- Figur 5:: Simulation zum Verlauf der Wasserdampfpartialdrücke entlang der Membran bei einer mehrstufigen Shiftstufe als Wasserdampf benötigenden Teilprozess gemäß Figur 4;

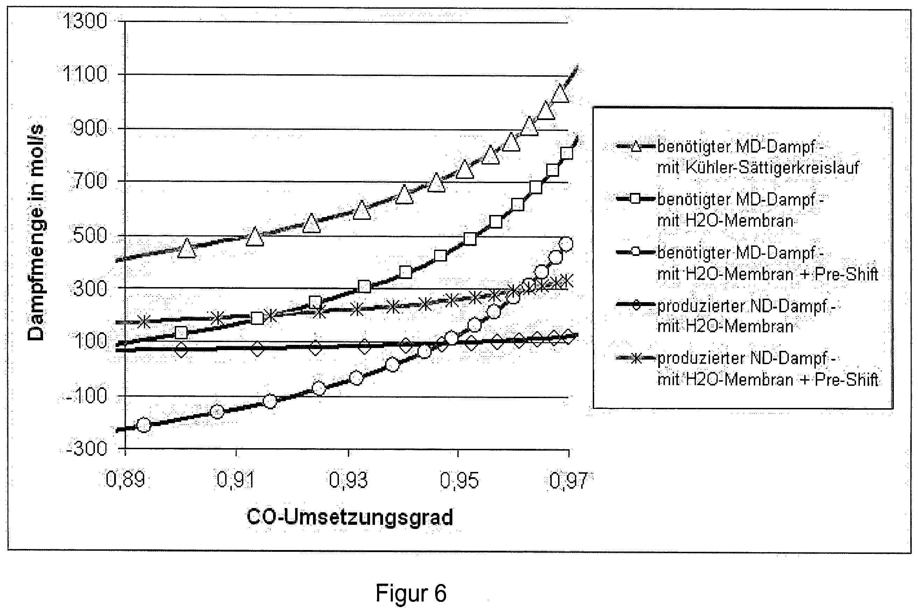

- Figur 6:: Vergleich der Dampfmenge für eine Shiftreaktion mit und ohne Einsatz einer Wasserdampf leitenden Membran zur Wasserdampfrezirkulation;
- Figur 7:: Prinzipielle Funktionsweise einer Wasserdampf leitenden Membran zur Wasserdampfrezirkulation vor und nach einem Wassergas-ShiftMembranreaktor als Wasserdampf benötigenden Teilprozess;

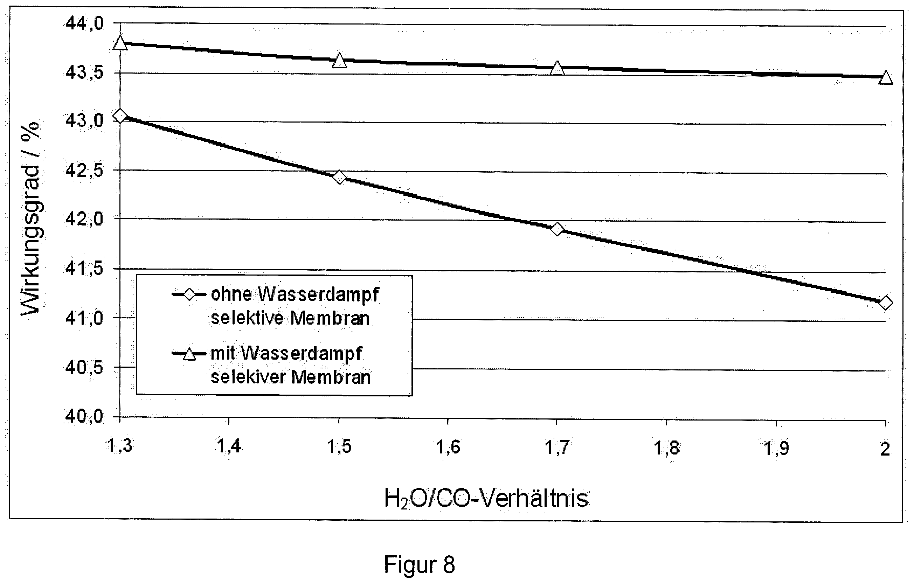

- Figur 8:: Simulation zur Abhängigkeit des Wirkungsgrades von dem eingestellten H₂O/CO-Verhältnis bei einem Wassergas-Shift-Membranreaktor mit (gemäß Figur 4) und ohne erfindungsgemäßer Wasserdampfrezirkulation und mit einer CO₂-Abtrennung.

In den Figuren bedeuten:
- Eduktstrom: Wasserdampfhaltiger Gasstrom, der zu dem Wasserdampf benötigenden Teilprozess geleitet wird (die Sättigung für Wasserdampf ist in der Regel nicht erreicht);
- Produktstrom: Wasserdampfhaltiger Gasstrom, der den Teilprozess verlässt;
- p₁: Wasserdampfpartialdruck im Eduktstrom vor dem Membranmodul in [Pa];
- p₁+Δp₁: Wasserdampfpartialdruck im Eduktstrom nach dem Membranmodul in [Pa];
- p₂: Wasserdampfpartialdruck im Produktstrom vor dem Membranmodul in [Pa], wobei p₂ > p₁;
- p₂-Δp₂: Wasserdampfpartialdruck im Produktstrom nach dem Membranmodul in [Pa];
wobei Δp₁ in der Regel ungleich Δp₂ ist, da zwar die absolute Masse an durch die Membran permeiertem Wasserdampf auf der Permeatseite (Produktseite) und der Retentatseite (Eduktseite) identisch ist, aber auf Grund der unterschiedlichen Molenströme von Edukt- und Produktstrom zu jeweils unterschiedlichen Partialdruckänderungen Δp führen kann.

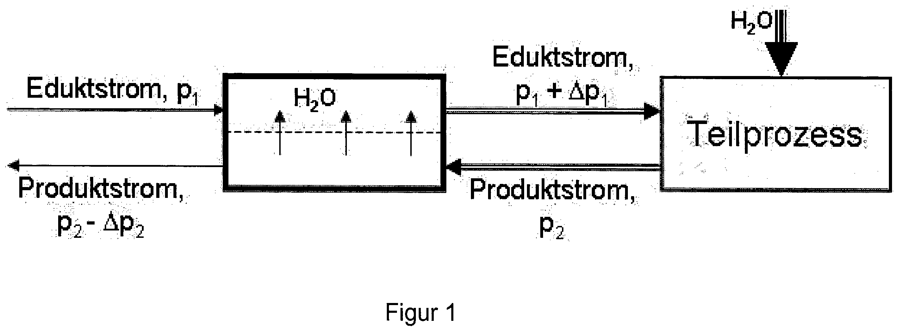

In Figur 1 ist die prinzipielle Funktionsweise einer Wasserdampf leitenden Membran vor und nach einem Wasserdampf benötigenden Teilprozess dargestellt. In der Regel wird die Membran im Gegenstrom betrieben, kann aber unter besonderen Umständen auch im Kreuz- oder Gleichstrom betrieben werden. Der in dem Teilprozess nicht umgesetzte Wasserdampf kann nach dem Teilprozess über ein Membranmodul zumindest teilweise rezykliert und somit für den Teilprozess erneut nutzbar gemacht werden. Der den Teilprozess verlassende, wasserdampfhaltige Gasstrom (Produktstrom) braucht vorteilhaft nicht auskondensiert zu werden. In diesem Fall kann der Anteil an Wasserdampf, der dem Teilprozess extern zugeführt werden muss, vorteilhaft entsprechend verringert werden.

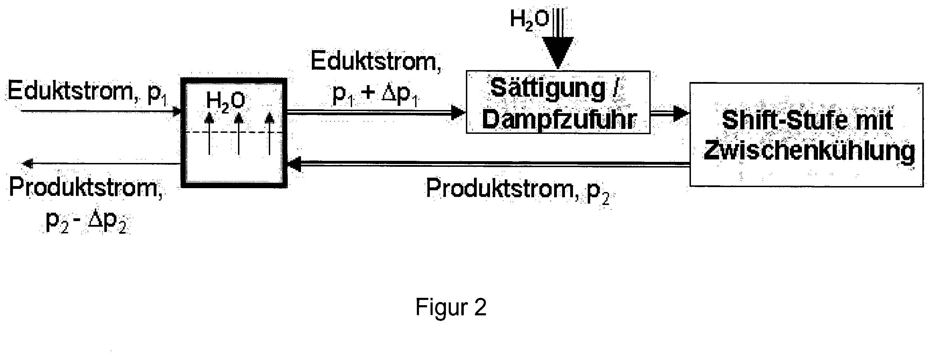

In der Figur 2 ist als Teilprozess eine Shiftstufe dargestellt. Nach dem Membranmodul, in welchem der Shiftstufe zugeführte Gasstrom (Eduktstrom) bereits teilweise mit Wasserdampf angereichert wird, wird diesem noch vor oder in dem Teilprozess extern lediglich noch soviel weiterer Wasserdampf zugeführt, so dass ein vorher festgelegtes stöchiometrisches Verhältnis eingestellt wird. In diesem Fall besteht der Teilprozess beispielsweise aus mehreren Shiftstufen, mit einer dazwischen angeordneten Zwischenkühlung.

Für diese Ausgestaltung mit einer Shiftstufe als Wasserdampf benötigenden Teilprozess in einem IGCC (integrated gasification combined cycle)-Kraftwerk mit CO₂-Abtrennung als Gesamtprozess wurde exemplarisch eine Simulation der Stoffströme durchgeführt, um den Vorteil der Erfindung herauszustellen, ohne dass diese auf diese Ausführung beschränkt ist.

Die Auslegung der Simulation erfolgte für ein 360 MW IGCC mit CO₂-Abtrennung. Das Synthesegas (Eduktstrom) weist einen Druck von ca. 2,70 MPa auf, während das CO₂-haltige Gas die Shiftstufe mit einem Druck von ca. 2,58 MPa bar verlässt. Als minimale Triebkraft über die Membranfläche wurden 100 hPa festgelegt. Der H₂-Abtrenngrad lag bei 95 % bezogen auf den theoretischen (100 %) CO-Umsatz, Die Permeanz der Membran wurde auf 1,0 Nm³/ (h*hPa*m²) festgelegt. Die beteiligten Stoffströme, Wasseranteile und Partialdrücke sind in Tabelle 1 wiedergegeben.

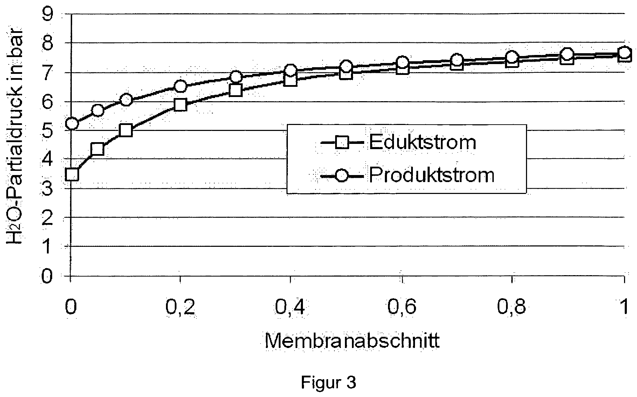

**Tabelle 1: Partialdruckverlauf entlang der Membran, dargestellt in Figur 3**

| Membranabschnitt | Druck Retentat [MPa] | Anteil H₂O [mol-%] | Partialdruck Eduktstrom [kPa] | Druck Permeat [MPa] | Anteil H₂O [mol-%] | Partialdruck Produktstrom [bar] |
|---|---|---|---|---|---|---|
| 0 | 2,70 | 12,8 | 350 | 2,58 | 20,1 | 520 |
| 0,05 | 2,70 | 16,0 | 430 | 2,59 | 21,9 | 570 |
| 0,1 | 2,70 | 18,5 | 500 | 2,59 | 23,2 | 600 |
| 0,15 | 2,70 | 20,3 | 550 | 2,59 | 24,3 | 630 |
| 0,2 | 2,70 | 21,7 | 580 | 2,59 | 25,1 | 650 |
| 0,3 | 2,69 | 23,6 | 640 | 2,60 | 26,2 | 680 |
| 0,4 | 2,69 | 25,0 | 670 | 2,60 | 27,0 | 700 |
| 0,5 | 2,68 | 25,9 | 700 | 2,60 | 27,6 | 720 |
| 0,6 | 2,68 | 26,6 | 710 | 2,61 | 28.0 | 730 |
| 0,7 | 2,68 | 27.1 | 730 | 2,61 | 28,4 | 740 |
| 0,8 | 2,67 | 27,6 | 740 | 2,62 | 28,6 | 750 |
| 0,9 | 2,67 | 0,279 | 750 | 2,62 | 0,289 | 760 |
| 1 | 2,66 | 0,283 | 750 | 2,62 | 0,291 | 760 |

Durch den Einsatz der Membran zur Wasserdampfrezirkulation kann der Wasserdampfpartialdruck des Synthesegases von anfänglich 350 auf 750 kPa gesteigert werden, während der Wasserdampfpartialdruck des H₂-reichen Produktgases (größerer Molenstrom) von 760 auf 520 kPa reduziert wird. Die Differenzen der jeweiligen Partialdrücke beim Eintritt und beim Austritt aus der Membran sind auf Grund der unterschiedlichen Stoffströme für das Edukt- und das Produktgas nicht Identisch.

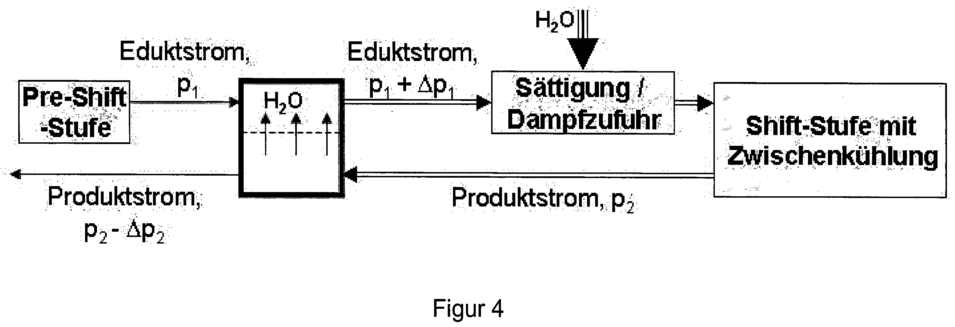

In Figur 4 ist eine weitere Ausgestaltung der Erfindung dargestellt, bei der ein zunächst wasserdampfhaltiger Gasstrom eine Pre-Shiftstufe durchläuft, wodurch der Wasserdampfanteil im Gasstrom reduziert wird. Anschließend wird dieser Gasstrom über ein Membranmodul zumindest teilweise mit weiterem Wasserdampf angereichert, bevor er in die eigentliche Shiftstufe geleitet wird. Anders als in Figur 2 gezeigt, reicht hier eine unterstöchiometrische Zugabe an weiterem Wasserdampf vor dem Eintritt in die eigentliche Shiftstufe aus, da in der Pre-Shiftstufe ja bereits eine Teilumsetzung stattgefunden hat.

Auch für diese Ausgestaltung mit einer mehrstufigen Shiftstufe als Wasserdampf benötigenden Teilprozess in einem IGCC (integrated gasification combined cycle)-Kraftwerk mit CO₂-Abtrennung als Gesamtprozess wurde exemplarisch eine Simulation der Stoffströme durchgeführt, um den Vorteil der Erfindung herauszustellen, ohne dass diese auf diese Ausführung beschränkt ist.

Die Auslegung der Simulation erfolgte ebenfalls für ein 360 MW IGCC mit CO₂-Abtrennung. Angenommen wurde ein zweistufiger Shiftreaktor (Eintrittstemperatur 1. Rektor ∼ 310 °C/2, Rektor ∼ 290 °C), der im IGCC im sauren, d. h. schwefelhaltigen Bereich hinter einer Wasserwäsche eingebaut wurde. Das Synthesegas (Eduktgas) weist nach der Pre-Shiftstufe bei Eintritt in die Membran einen Druck von knapp 2,7 mPa auf, während das CO₂-haltige Gas die Shiftstufe mit einem Druck von 2,6 MPa verlässt. Als minimale Triebkraft über die Membranfläche wurden 100 hPa festgelegt. Der H₂-Abtrenngrad lag bei 95 % bezogen auf den theoretischen (100 %) CO₂-Umsatz. Die Permeanz der Membran wurde auf 1,0 Nm³/ (h*kPa*m²) festgelegt. Die beteiligten Stoffströme, Wasseranteile und Wasserdampfpartialdrücke sind in Tabelle 2 wiedergegeben.

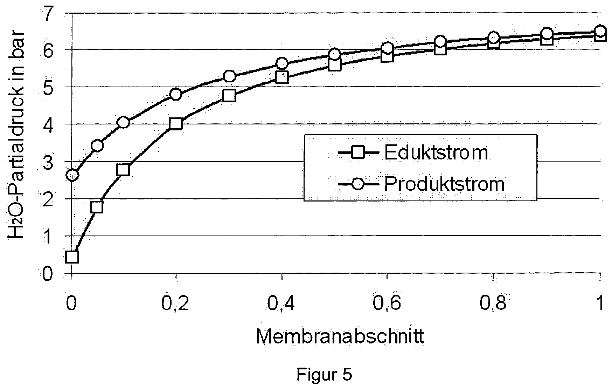

**Tabelle 2: Partialdruckverlauf entlang der Membran, dargestellt in Figur 5**

| Membranabschnitt | Druck Retentat [MPa] | Anteil H₂O [mol-%] | H₂O-Partialdruck Eduktstrom [kPa] | Druck Permeat [MPa] | Anteil H₂O [mol-%] | H₂O-Partialdruck Produktstrom [kPa] |
|---|---|---|---|---|---|---|
| 0 | 2,68 | 1,5 | 40 | 2,56 | 10,3 | 260 |
| 0,05 | 2,68 | 6,6 | 180 | 2,57 | 13,3 | 340 |
| 0,1 | 2,68 | 10,3 | 280 | 2,57 | 15,6 | 400 |
| 0,15 | 2,68 | 12,9 | 350 | 2,57 | 17,4 | 450 |
| 0,2 | 2,68 | 14,9 | 400 | 2,57 | 18,7 | 480 |
| 0,3 | 2,67 | 17,7 | 470 | 2,58 | 20,5 | 530 |
| 0,4 | 2,67 | 19,6 | 520 | 2,58 | 21,8 | 560 |
| 0,5 | 2,66 | 20,9 | 560 | 2,58 | 22,7 | 590 |
| 0,6 | 2,66 | 21,9 | 580 | 2,59 | 23,4 | 600 |
| 0,7 | 2,66 | 22,6 | 600 | 2,59 | 23,9 | 620 |
| 0,8 | 2,65 | 23,2 | 620 | 2,60 | 24,3 | 630 |
| 0,9 | 2,65 | 23,7 | 630 | 2,60 | 24,6 | 640 |
| 1 | 2,64 | 24,1 | 640 | 2,6,0 | 24,9 | 650 |

Durch den Einsatz der Membran zur Wasserdampfrezirkulation kann bei dieser Ausgestaltung der Wasserdampfpartialdruck des Synthesegases von anfänglich 45 auf 640 kPa deutlich gesteigert werden, während der Wasserdampfpartialdruck des H₂-reichen Produktgases (größerer Molenstrom) von 650 auf 260 kPa reduziert wird. Die Differenzen der jeweiligen Partialdrücke beim Eintritt und beim Austritt aus der Membran sind auch hier auf Grund der unterschiedlichen Stoffströme für das Edukt- und das Produktgas nicht identisch.

Wie an den Partialdruckverläufen in den Figuren 3 und 5 zu sehen ist, ist die minimale Partialdruckdifferenz (von 100 hPa) auf der Seite der hohen H₂O-Anteile. Dies liegt an dem Verhältnis der Molenströme (der Produktstrom hat einen höheren Molenstrom). Deswegen kann nicht alles an Dampf rezirkuliert werden und der Produktstrom weist nach Durchlaufen des Membranmoduls immer noch einen gewissen H₂O-Partialdruck auf. Eine weitere Verbesserung wäre also insofern noch möglich, wenn eine weitere Pre-Shiftstufe und eine zusätzliche Dampfmembran vorgeschaltet werden.

Die Vorteile der erfindungsgemäß eingesetzten wasserdampfselektiven Membran vor einer Shifstufe als Wasserdampf benötigendem Teilprozess in einem Gesamtprozess, werden auch in einem Vergleich zum Dampfverbrauch deutlich.

Der Einsatz einer wasserdampfselektiven Membran in Kombination mit einer Pre-Shiftstufe erhöht die Vorteile weiter, da ein größerer Anteil des Dampfes im Produktstrom rezirkuliert werden kann. So wird der benötigte Mltteldruck-Dampf bei einem CO-Umsatz von 95 % im Vergleich zur Shiftstufe ohne Membran sogar um ca. 80 % reduziert. Gleichzeitig wird mehr Niederdruck-Dampf produziert.

In einer Vergleichsrechnung wurde die benötigte Dampfmenge für ein Verfahren mit einem herkömmlichen Kühler-Sättigerkreislauf einem erfindungsgemäßen Verfahren mit Einsatz einer wasserdampfselektiven Membran gegenübergestellt. Dabei wurde festgestellt, dass unabhängig vom eingestellten CO-Umsatzgrad die benötigte Dampfmenge für das erfindungsgemäße Verfahren deutlich geringer ausfällt. Einerseits wird in dem System Wasserdampf über die Membran direkt auf hohem Temperaturniveau zur Verfügung gestellt, und andererseits führt der Verzicht auf eine weitere Abkühlung/Kondensation dazu, dass die vorhandene Wärme vorteilhaft zur weiteren Dampferzeugung eingesetzt werden kann, ohne die Gesamteffektivität zu verringen.

Dies soll an einem Beispiel für einen CO-lJmsetzungsgrad von 0,94 verdeutlicht werden. Als Referenz wird eine Simulation mit einem Kühler-Sättigerkreislauf vorgenommen, bei der die zugeführte benötigte Dampfmenge zu 654 mol/s ermittelt wird. Unter sonst identischen Rahmenbedingungen wird für das erfindungsgemäße Verfahren ein Bedarf an Wasserdampf von zunächst 2223 mol/s ermittelt, von denen jedoch aufgrund des im System vorhandenen hohem Wärmeniveaus und aufgrund von bereits vorliegendem (vorgeheiztem) Wasser ca. 1862 mol/s selbst durch Verdampfung erzeugt werden können, so dass in Summe nur noch 361 mol/s Wasserdampf extern zugeführt werden müssen.

Zusätzlich würden weitere 93,5 mol/s als Niederdruckdampf erzeugt werden können.

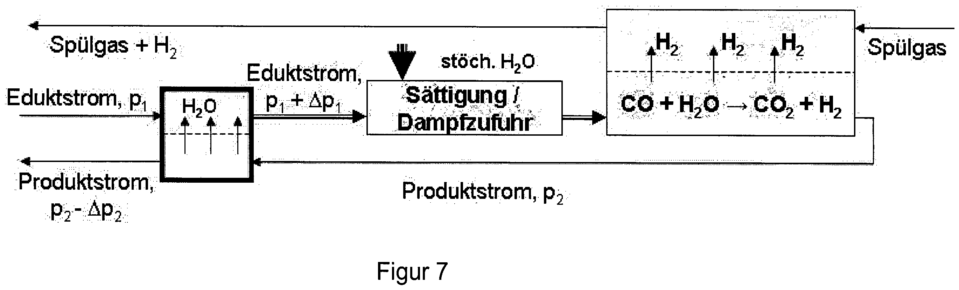

Eine weitere Ausgestaltung der Erfindung ist in der Figur 7 dargestellt. Anstelle einer Shiftstufe wie In der Figur 2 gezeigt, wird hier ein Wassergas-Shift-Membranreaktor (WGS-Reaktor) als Wasserdampf benötigender Teilprozess eingesetzt, bei dem gleichzeitig Wasserstoff abgetrennt wird.

Im Allgemeinen weist ein IGCC ohne CO₂-Abtrennung mit ca. 47,9 % einen höheren Wirkungsgrad auf, als ein IGCC mit CO₂-Abtrennung. Zum einen muss der Aufwand für die Abtrennung selbst berücksichtigt werden. Hauptsächlich trägt aber die Bereitstellung von zusätzlichem Dampf dazu bei, dass der Wirkungsgrad geringer ausfällt. Hinzu kommt, dass das abgetrennte CO₂ bei der Entspannung in der Gasturbine und somit zur Stromerzeugung nicht mehr zur Verfügung steht.

Für diese Ausgestaltung mit einem Wassergas-Shift-Membranreaktor als Wasserdampf benötigenden Teilprozess in einem IGCC (integrated gasification combined cycle)- Kraftwerk mit CO₂-Abtrennung als Gesamtprozess wurde exemplarisch eine Simulation der Stoffströme durchgeführt, um den Vorteil der Erfindung herauszustellen, ohne dass diese auf diese Ausführung beschränkt ist.

Das H₂O/CO-Verhältnis kann in einem bestimmten Rahmen in einem Wassergas-Shift-Membranreaktor variiert werden. Ein kleines Verhältnis (< 1,5) hat energetische Vorteile, da weniger Dampf beigesteuert werden muss. Ein größeres Verhältnis kann aber dennoch notwendig sein, um die Gefahr von Rußbildung zu verringern oder den Anteil von Inertgas im Strom zu erhöhen, der die Wärme der Shiftreaktion aufnimmt, um so die Temperaturgradienten zu verringern.

Nun kann aber eine wasserdampfselektive Membran vorteilhaft hinter der Abwärmenutzung des CO₂-Stroms (Feedseite) und vor den Sättiger des Synthesegases (Permeatseite) eingebaut werden, da dort die gewünschten Temperaturniveaus und Dampfpartialdrücke vorliegen.

Die Simulation ergab dabei, dass durch den Einsatz einer Wasserdampfrezirkulationsmembran an geeigneter Stelle einerseits das generelle Niveau des Wirkungsgrads gesteigert werden konnte, als auch andererseits die Abhängigkeit vom H₂O/CO-Verhältnis sinkt.

Dabei zeigt die Variation des H₂O/CO-Verhältnisses beim normalen Konzept großen Einfluss auf den Wirkungsgrad des IGCC mit CO₂-Abtrennung. Während der Wirkungsgradverlust im Vergleich zum IGCC ohne CO₂-Abtrennung bei einem H₂O/CO-Verhältnis von 1,3 nur 4,8 %-Punkte beträgt, steigt er bei einem Verhältnis von 2,0 auf 6,7 %-Punkte.

In der nachfolgenden Tabelle 3 sind die Mengen an bereitgestelltem Wasserdampf für verschiedne H₂O/CO-Verhältnisse ohne Einsatz einer wasserdampfselektlven Membran und mit gegenübergestellt. Deutlich ist das große Einsparungspotential beim Einsatz der wasserdampfselektiven Membran vor einer Shiftstufe zu erkennen.

**Tabelle 3:**

| H₂O/CO-Verhältnis | ohne Membran in [mol/s] | mit Membran in [mol/s] | Ersparnis in [mol/s] |
|---|---|---|---|
| 1,3 | 1645 | 1157 | 488 |
| 1,5 | 1900 | 1157 | 743 |
| 1,7 | 2155 | 1157 | 998 |
| 2,0 | 2539 | 1157 | 1382 |

Der Einsatz einer wasserdampfselektiven Membran zur Übertragung von Wasserdampf vom Produkt- auf den Eduktstrom bei einem Wassergas-Shiftmembranreaktor als Wasserdampf benötigender Teilprozess hat einen deutlich positiven Einfluss auf den gesamten Wirkungsgrad. So beträgt der Wirkungsgradverlust im Vergleich zum IGCC ohne CO₂-Abtrennung bei einem H₂O/CO-Verhältnis von 1,3 mit einer wasserdampfselektiven Membran jetzt nur noch 4,1 %-Punkte und bei einem H₂O/CO-Verhältnis von 2,0 sogar nur noch 4,4 %-Punkte. Das bedeutet aber, dass vorteilhaft einerseits ein guter Wirkungsgrad erzielt werden kann, ohne auf die Vorteile eines höheren H₂O/CO-Verhältnisses verzichten zu müssen.

Die Auslegung der Simulation erfolgte für ein 360 MW IGCC mit CO₂-Abtrennung. Das Synthesegas (Eduktgas) weist bei Eintritt in die Membran einen Druck von 2,3 MPa auf, während das CO₂-haltige Gas den Wassergas-Shift-Membranreaktor mit einem Druck von 1,9 MPa verlässt. Als minimale Triebkraft über die Membranfläche wurden 100 hPa festgelegt. Der H₂-Abtrenngrad lag bei 95 % bezogen auf den theoretischen (100 %) CO₂-Umsatz. Die Permeanz der Membran wurde auf 1,0 Nm³/ (h*kPa*m²) festgelegt. Die beteiligten Stoffströme, Wasseranteile und Dampfdrücke sind in Tabelle 4 für unterschiedliche vorgegebene H₂O/CO-Verhältnisse wiedergegeben. Die Bezeichnungen Eingang und Ausgang beziehen sich bei den entsprechenden Gasströmen auf das Membranmodul, bzw, die Membran.

**Tabelle 4**

| H₂O/CO-Verhältnis | | Eduktgas Eingang | Eduktgas Ausgang | Produktgas Eingang | Produktgas Ausgang |
|---|---|---|---|---|---|
| 1,3 | Stoffstrom(Gesamt) in mol/s | 3032 | 3512 | 2316 | 1835 |
| | Stoffstrom(H₂O) in mol/s | 35 | 516 | 515 | 34,3 |
| | Anteil H₂O in Mol- % | 1,15 | 14,68 | 22,23 | 1,87 |
| | Partialdruck H₂O in kPa | 26,6 | 337,6 | 435,7 | 36,6 |
| 1,5 | Stoffstrom(Gesamt) in mol/s | 3032 | 3770 | 2574 | 1836 |
| | Stoffstrom(H₂O) in mol/s | 35 | 773 | 773 | 34,4 |
| | Anteil H₂O in Mol- % | 1,15 | 20,51 | 30,01 | 1,87 |
| | Partialdruck H₂O in kPa | 26,6 | 471,7 | 588,2 | 36,7 |
| 1,7 | Stoffstrom(Gesamt) in mol/s | 3032 | 4030 | 2835 | 1836 |
| | Stoffstrom(H₂O) in mol/s | 35 | 1034 | 1033 | 34,4 |
| | Anteil H₂O in Mol- % | 1,15 | 25,65 | 36,44 | 1,87 |
| | Partialdruck H₂O in kPa | 26,6 | 589,9 | 714,2 | 36,7 |
| 2,0 | Stoffstrom(Gesamt) in mol/s | 3032 | 4418 | 3223 | 1836 |
| | Stoffstrom(H₂O) in mol/s | 35 | 1422 | 1421 | 34,3 |
| | Anteil H₂O in Mol- % | 1,15 | 32,17 | 44,09 | 1,87 |
| | Partialdruck H₂O in kPa | 26,6 | 740,0 | 864,2 | 36,6 |

## Patentansprüche

1. Verfahren zum Betreiben eines Teilprozesses innerhalb eines Gesamtprozesses,
- wobei der Teilprozess Wasserdampf benötigt, der nicht bzw. nicht vollständig im Teilprozess verbraucht wird, und
- wobei zusätzlich zu einer externen Zuführung von Wasserdampf zu dem Teilprozess ein wasserdampfhaltiger Eduktgasstrom mit einem Wasserdampfpartialdruck p₁ in den Teilprozess eingeleitet und ein Produktgasstrom mit einem Wasserdampfpartialdruck p₂ > p₁ aus dem Teilprozess herausgeleitet wird,
- wobei bei dem Gesamtprozess ein Synthesegas entsteht, welches als Eduktgasstrom eingesetzt wird und nachfolgend zur Steigerung der H₂-Ausbeute den Teilprozess durchläuft,
- wobei als Teilprozess ein Prozess zur Umsetzung von CO und H₂O zu CO₂ und H₂ mittels einer Wassergas-Shift-Reaktion vorgesehen ist,
- wobei der Produktgasstrom aus dem Teilprozess der Retentatseite eines Membranmoduls als Feed zugeführt wird und dieses Membranmodul mit einem verringerten Wasserdampfpartialdruck p₂-Δp₂ als Retentat verlässt,
- wobei der Eduktgasstrom vor dem Eintritt in den Teilprozess der Permeatseite dieses Membranmoduls zugeführt wird und dieses mit einem erhöhten Wasserdampfpartialdruck p₁+Δp₁ als Permeat verlässt, welches anschließend dem Teilprozess zugeführt wird,
- wobei im Membranmodul auf Grund eines Partialdruckgefälles für H₂O von wenigstens 10 hPa Wasserdampf von dem Produktgasstrom auf der Retentatseite über eine wasserdampfselektive Membran direkt auf den Eduktgasstrom auf der Permeatseite übergeleitet wird.

2. Verfahren nach Anspruch 1, wobei im Membranmodul ein Partialdruckgefälle für H₂O von wenigstens 50 hPa, vorteilhaft von wenigstens 100 hPa vorliegt.

3. Verfahren nach einem der Ansprüche 1 bis 2, bei dem der Eduktgasstrom Temperaturen T₁ zwischen 80 °C und 550 °C aufweist, insbesondere Temperaturen zwischen 100 °C und 200 °C.

4. Verfahren nach einem der Ansprüche 1 bis 3, bei dem der Produktgasstrom Temperaturen T₂ zwischen 80 °C und 550 °C aufweist, insbesondere Temperaturen zwischen 100 °C und 200 °C.

5. Verfahren nach einem der Ansprüche 1 bis 4, bei dem der Eduktgasstrom vor Eintritt in das Membranmodul einen Wasserdampfpartialdruck p₁ bis 2 MPa bar, insbesondere zwischen 50 und 500 kPa aufweist.

6. Verfahren nach einem der Ansprüche 1 bis 5, bei dem der Produktgasstrom vor Eintritt in das Membranmodul einen Wasserdampfpartialdruck p₂ zwischen 20 kPa und 5 MPa, insbesondere zwischen 500 kPa und 2 MPa aufweist.

7. Verfahren nach einem der Ansprüche 1 bis 6, bei dem der Eduktgasstrom vor Eintritt in das Membranmodul einen Gesamtdruck P₁ zwischen 100 kPa und 10 MPa, vorzugsweise zwischen 100 kPa und 3 MPa aufweist.

8. Verfahren nach einem der Ansprüche 1 bis 7, bei dem die Druckdifferenz innerhalb des Membranmoduls über die Membran nicht mehr als 500 kPa, vorzugsweise nicht mehr als 200 kPa beträgt.

9. Verfahren nach einem der Ansprüche 1 bis 8, bei dem eine Polymermembran eingesetzt wird.

10. Verfahren nach einem der Ansprüche 1 bis 9, bei dem eine mehrstufige Shiftstufe als Teilprozess vorgesehen wird.

11. Verfahren nach einem der Ansprüche 1 bis 9, bei dem ein Wassergas-Shiftmembran-Reaktor als Teilprozess vorgesehen wird.

12. Verfahren nach einem der Ansprüche 1 bis 11, bei dem der Eduktgasstrom vor Eintritt in das Membranmodul eine Pre-Shiftstufe durchläuft.

13. Verfahren nach einem der Ansprüche 1 bis 12, mit einem IGCC (integrated gasification combined cycle)-Kraftwerk als Gesamtprozess.

## Claims

1. Method for operating a subprocess within an overall process,
- in which the subprocess requires steam, which is not or not completely used up in the subprocess, and
- in which in addition to an external supply of steam to the subprocess a feed gas flow containing steam with a steam partial pressure p₁ is introduced into the subprocess and a product gas flow with a steam partial pressure p₂ > p₁ is removed from the subprocess,
- in which
in the overall process a synthesis gas occurs, which is used as a feed gas flow and then passes through the subprocess to increase the H₂ yield,
- in which
a process for converting CO and H₂O into CO₂ and H₂ by means of a water-gas shift reaction is provided as a subprocess,
- in which
the product gas flow from the subprocess is supplied to the retentate side of a membrane module as feed and leaves this membrane module with a reduced steam partial pressure p₂-Δp₂ as retentate,
- in which
before entering into the subprocess the feed gas flow is supplied to the permeate side of this membrane module and leaves it with an increased steam partial pressure p₁+Δp₁ as permeate, which is then supplied to the subprocess,
- in which because of a partial pressure fall for H₂O of at least 10 hPa in the membrane module steam from the product gas flow on the retentate side is conducted through a steam-selective membrane directly to the feed gas flow on the permeate side.

2. Method according to claim 1, in which there is a partial pressure fall for H₂O of at least 50 hPa, advantageously of at least 100 hPa, in the membrane module.

3. Method according to one of claims 1 to 2, in which the feed gas flow has temperatures T₁ of between 80° C and 550° C, particularly temperatures of between 100° C and 200° C.

4. Method according to one of claims 1 to 3, in which the product gas flow has temperatures T₂ of between 80° C and 550° C, particularly temperatures of between 100° C and 200° C.

5. Method according to one of claims 1 to 4, in which before entering into the membrane module the feed gas flow has a steam partial pressure p₁ of up to 2 MPa bar, particularly of between 50 and 500 kPa.

6. Method according to one of claims 1 to 5, in which before entering into the membrane module the product gas flow has a steam partial pressure p₂ of between 20 kPa and 5 MPa, particularly of between 500 kPa and 2 MPa.

7. Method according to one of claims 1 to 6, in which before entering into the membrane module the feed gas flow has an overall pressure P₁ of between 100 kPa and 10 MPa, preferably of between 100 kPa and 3 MPa.

8. Method according to one of claims 1 to 7, in which the pressure difference within the membrane module through the membrane is not more than 500 kPa, preferably not more than 200 kPa.

9. Method according to one of claims 1 to 8, in which a polymer membrane is used.

10. Method according to one of claims 1 to 9, in which a shift stage with several stages is provided as a subprocess.

11. Method according to one of claims 1 to 9, in which a water-gas shift membrane reactor is provided as a subprocess.

12. Method according to one of claims 1 to 11, in which before entering into the membrane module the feed gas flow passes through a pre-shift stage.

13. Method according to one of claims 1 to 12 with an IGCC (integrated gasification combined cycle) power plant as the overall process.

## Revendications

1. Procédé servant à faire fonctionner un processus partiel à l'intérieur d'un processus global,
- dans lequel le processus partiel requiert de la vapeur d'eau, qui n'est pas consommée ou n'est pas totalement consommée dans le processus partiel, et
- dans lequel en plus d'une amenée externe de vapeur d'eau au processus partiel, un flux de gaz de départ contenant de la vapeur d'eau présentant une pression partielle de vapeur d'eau p₁ est introduit dans le processus partiel et un flux de gaz de produit présentant une pression partielle de vapeur d'eau p₂ > p₁ est évacué du processus partiel,
- dans lequel un gaz de synthèse apparaît lors du processus global, lequel gaz de synthèse est utilisé en tant que flux de gaz de départ, et traverse le processus partiel par la suite afin d'augmenter le rendement de H₂,
- dans lequel un processus servant à transformer du CO et du H₂O en CO₂ et en H₂ au moyen d'une réaction de conversion de gaz à l'eau est prévu en tant que processus partiel,
- dans lequel le flux de gaz de produit issu du processus partiel est amené en tant qu'apport au côté de rétentat d'un module à membrane et quitte en tant que rétentat ledit module à membrane avec une pression partielle de vapeur d'eau réduite p₂-Δp₂,
- dans lequel le flux de gaz de départ est amené avant d'entrer dans le processus partiel au côté de perméat dudit module à membrane et quitte ce dernier en tant que perméat avec une pression partielle de vapeur d'eau plus élevée p₁+Δp₁, lequel perméat est amené immédiatement après au processus partiel,
- dans lequel de la vapeur d'eau est transmise du flux de gaz de produit sur le côté de rétentat directement sur le flux de gaz de départ sur le côté de perméat en passant par une membrane à sélection de vapeur d'eau dans le module à membrane du fait d'une baisse de la pression partielle pour H₂O d'au moins 10 hPa.

2. Procédé selon la revendication 1, dans lequel une baisse de la pression partielle pour H₂O d'au moins 50 hPa, de manière avantageuse d'au moins 100 hPa est de mise dans le module à membrane.

3. Procédé selon l'une quelconque des revendications 1 à 2, dans lequel le flux de gaz de départ présente des températures T₁ comprises entre 80 °C et 550 °C, en particulier des températures comprises entre 100 °C et 200 °C.

4. Procédé selon l'une quelconque des revendications 1 à 3, dans lequel le flux de gaz de départ présente des températures T₂ comprises entre 80 °C et 550 °C, en particulier des températures comprises entre 100 °C et 200 °C.

5. Procédé selon l'une quelconque des revendications 1 à 4, dans lequel le flux de gaz de départ présente avant d'entrer dans le module à membrane une pression partielle de vapeur d'eau p₁ allant jusqu'à 2 MPa bar, en particulier comprise entre 50 et 500 kPa.

6. Procédé selon l'une quelconque des revendications 1 à 5, dans lequel le flux de gaz de produit présente avant d'entrer dans le module à membrane une pression partielle de vapeur d'eau p₂ comprise entre 20 kPa et 5 MPa, en particulier comprise entre 500 kPa et 2 MPa.

7. Procédé selon l'une quelconque des revendications 1 à 6, dans lequel le flux de gaz de départ présente avant d'entrer dans le module à membrane une pression globale P₁ comprise entre 100 kPa et 10 MPa, de préférence comprise entre 100 kPa et 3 MPa.

8. Procédé selon l'une quelconque des revendications 1 à 7, dans lequel la différence de pression à l'intérieur du module à membrane au-dessus de la membrane présente une valeur inférieure ou égale à 500 kPa, de préférence une valeur inférieure ou égale à 200 kPa.

9. Procédé selon l'une quelconque des revendications 1 à 8, dans lequel une membrane polymère est utilisée.

10. Procédé selon l'une quelconque des revendications 1 à 9, dans lequel une phase de conversion à plusieurs phases est prévue en tant que processus partiel.

11. Procédé selon l'une quelconque des revendications 1 à 9, dans lequel un réacteur à membrane de conversion de gaz à eau est prévu en tant que processus partiel.

12. Procédé selon l'une quelconque des revendications 1 à 11, dans lequel le flux de gaz de produit traverse avant d'entrer dans le module à membrane une pré-phase de conversion.

13. Procédé selon l'une quelconque des revendications 1 à 12, comprenant en tant que processus global une centrale CCGI (à cycle combiné à gazéification intégrée).
